# FASCICULE DE BREVET EUROPEEN

(11) **EP 0 661 720 B1**
(45) Date de publication et mention de la délivrance du brevet: **23.04.1997**
(21) Numéro de dépôt: 94403011.3
(22) Date de dépôt: 23.12.1994
(51) Int. Cl.: G21C 13/036, G21C 17/017, B23K 15/00

(54) **Utilisation d'un procédé de réalisation d'un revêtement par arc semi-transféré pour la protection d'une zone hétérogène d'un composant nucléaire et dispositif de revêtement**
Anwendung eines Verfahrens zur Herstellung eines Überzugs durch einen halb-übertragenen Lichtbogen zum Schutz einer heterogenen Zone eines Kernreaktors-Bauteils und Vorrichtung zur Durchführung des Verfahrens
Use of a method for coating by semi-transfered arc for the protection of a heterogenous zone of a nuclear component and a coating device

(30) Priorité: 30.12.1993 FR 9315931
(43) Date de publication de la demande: 05.07.1995
(73) Titulaire: FRAMATOME, 92400 Courbevoie (FR)
(72) Inventeur: Cartry, Jean-Pierre, F-69003 Lyon (FR)
(74) Mandataire: Bouget, Lucien

(56) Documents cités:
- FR-A- 2 186 851
- FR-A- 2 495 734
- FR-A- 2 509 640
- FR-A- 2 558 767
- US-A- 3 921 440
- US-A- 4 440 339
- US-A- 4 672 852
- US-A- 4 716 572
- US-A- 5 274 683
- MEMOIRES ET ETUDES SCIENTIFIQUES DE LA REVUE DE METALLURGIE, vol. 84, Paris FR, page 107; L. FARCY et al.: 'Cinétique d'endommagement en fatigue thermique d'un alliage base cobalt'
- DATABASE WPI Week 3379 Derwent Publications Ltd., London, GB; AN 79-59957B & DD-A-136 114

## Description

L'invention concerne l'utilisation d'un procédé et d'un dispositif de réalisation d'un revêtement protecteur étanche par plasma d'arc semi-transféré pour la protection d'une zone hétérogène d'un composant d'un réacteur nucléaire tel qu'un réacteur nucléaire à eau sous pression.

Les réacteurs nucléaires à eau sous pression comportent un circuit primaire à l'intérieur duquel circule de l'eau sous une très forte pression de l'ordre de 155 bars et à une très haute température de l'ordre de 310°C.

Certaines parties des composants situés sur le circuit primaire du réacteur nucléaire sont particulièrement exposées à la corrosion fissurante, au contact de l'eau du circuit primaire ou au contact d'agents extérieurs, du fait de la température régnant dans le circuit primaire.

En particulier, les parties des composants comportant une liaison bimétallique sont exposées à ce type de corrosion.

Il en est ainsi des zones de soudure entre les canalisations du circuit primaire et les tubulures de raccordement de ces canalisations à la cuve qui sont revêtues intérieurement d'une couche d'acier inoxydable, des traversées du couvercle et du fond de la cuve qui sont constituées par des tubes en un alliage de nickel tel que l'Inconel 600, des zones de soudure de ces traversées sur le couvercle ou le fond de la cuve et plus généralement de toutes les zones du circuit primaire comportant des revêtements ou des soudures ou réalisés en alliage de nickel.

Des fissures ont été décelées dans certaines parties du circuit primaire du réacteur nucléaire, après un certain temps de fonctionnement du réacteur, et en particulier dans les zones présentant une certaine hétérogénité de composition, telles que les zones de soudure ou les zones revêtues d'un acier inoxydable ou d'un alliage de nickel. Des fissures ont également été décelées dans certaines traversées du couvercle ou du fond de la cuve, au niveau des zones de soudure sur la paroi du couvercle ou du fond de la cuve.

Lorsque des fissures sont décelées, il est nécessaire d'effectuer soit une réparation de la zone détériorée, soit un remplacement du composant comportant une zone détériorée.

Les opérations de réparation aussi bien que les opérations de remplacement de composants peuvent s'avérer très coûteuses et nécessiter des arrêts prolongés du réacteur nucléaire.

Il est donc souhaitable de disposer de procédés de traitement préventif des zones du circuit primaire d'un réacteur nucléaire les plus exposées à la fissuration pendant le fonctionnement du réacteur.

Jusqu'ici, on ne connaissait pas de procédé extrêmement efficace permettant d'éviter ou de limiter la fissuration des zones sensibles du circuit primaire d'un réacteur nucléaire et en particulier des zones présentant une hétérogénéité de composition.

Les procédés de revêtement connus et généralement utilisés pour la protection des surfaces métalliques contre la corrosion ne se sont pas avérés efficaces pour la protection des zones hétérogènes du circuit primaire d'un réacteur nucléaire ou pour la protection des surfaces en alliage de nickel du circuit primaire qui présentent une certaine sensibilité à la corrosion fissurante.

Dans le brevet français FR-A-2.509.640, on a proposé un procédé de fabrication d'une pièce métallique composite par revêtement d'une pièce en acier de construction au moyen d'une couche plus dure. Le revêtement est réalisé par soudure de sorte que la pièce subit une fusion superficielle. Le revêtement peut être réalisé au moyen d'une torche à plasma d'arc semi-transféré. La couche de revêtement présente une épaisseur supérieure à 6 mm et qui peut atteindre 16 mm. La pièce revêtue doit subir un traitement thermique de revenu.

Un tel procédé n'est donc pas utilisable sous sa forme décrite pour réaliser un revêtement étanche sur une surface d'un composant de réacteur nucléaire. Il n'est pas non plus suggéré dans ce document d'utiliser un revêtement réalisé par arc semi-transféré pour protéger une surface contre la corrosion fissurante.

L'invention propose l'utilisation d'un procédé de réalisation d'un revêtement sur une surface par balayage de la surface par un jet d'un plasma d'arc semi-transféré dans lequel on introduit une poudre métallique, pour la protection contre la corrosion d'une zone hétérogène du point de vue métallurgique, d'un composant d'un réacteur nucléaire susceptible de subir une fissuration pendant le fonctionnement du réacteur nucléaire, le réglage du jet de plasma, l'introduction de la poudre métallique dans le plasma et le balayage de la surface assurant une projection et une fixation de la poudre métallique sur la surface sans fusion de la surface du composant, pour réaliser une couche de revêtement compacte, homogène et étanche, d'une épaisseur au plus égale à 1 mm.

En particulier, pour la protection de zones du circuit primaire d'un réacteur nucléaire comportant des soudures ou des revêtements hétérogènes en alliage contenant du nickel, on introduit dans le jet de plasma d'arc semi-transféré, une poudre métallique contenant du nickel.

Afin de bien faire comprendre l'invention, on va maintenant décrire, à titre d'exemples non limitatifs, en se référant aux figures jointes en annexe, plusieurs exemples d'utilisation du procédé suivant l'invention pour la protection de zones du circuit primaire d'un réacteur nucléaire à eau sous pression et les dispositifs correspondants de mise en oeuvre du procédé.

La figure 1 est une vue schématique d'une torche à plasma d'arc semi-transféré.

La figure 2 est une vue en coupe par un plan axial d'une zone de raccordement entre une tuyauterie primaire et une tubulure d'un réacteur nucléaire à eau sous pression, pendant une opération de revêtement de la zone de raccordement par un procédé suivant l'invention.

La figure 3 est une vue suivant 3-3 de la figure 2.

La figure 4 est une vue en coupe axiale d'une zone de raccordement d'une canalisation primaire avec une tubulure d'un réacteur nucléaire à eau sous pression, pendant une opération de contrôle du revêtement de la zone de raccordement par un procédé suivant l'invention.

La figure 5 est une vue en coupe suivant 5-5 de la figure 4.

La figure 6 est une vue en coupe axiale analogue aux vues des figures 2 et 4 montrant la zone de raccordement du réacteur nucléaire en service.

La figure 7 est une vue en coupe par un plan vertical d'un couvercle de cuve, pendant une opération de revêtement de la surface intérieure d'un adaptateur par un procédé suivant l'invention.

La figure 8 est une vue à plus grande échelle du détail 8 de la figure 7.

La figure 9 est une vue en coupe par un plan vertical d'un couvercle de cuve d'un réacteur nucléaire à eau sous pression pendant une opération de revêtement de la soudure extérieure de fixation d'un adaptateur de traversée du couvercle, par un procédé suivant l'invention.

La figure 10 est une vue agrandie du détail 10 de la figure 9.

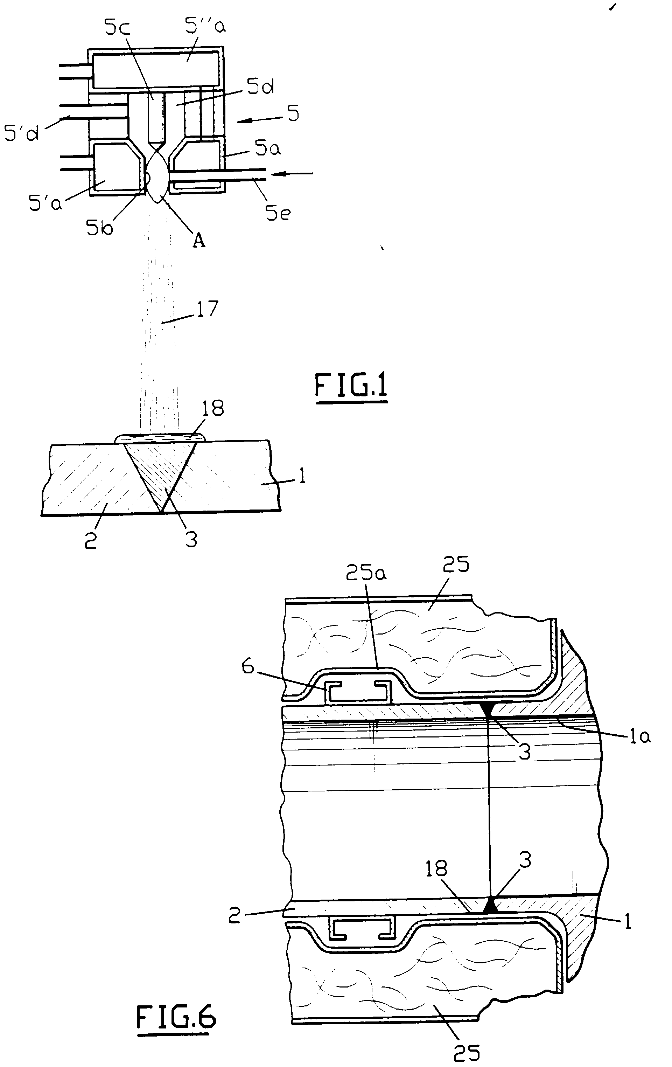

La structure et le fonctionnement d'une torche à plasma à arc semi-transféré seront décrits en se référant à la figure 1.

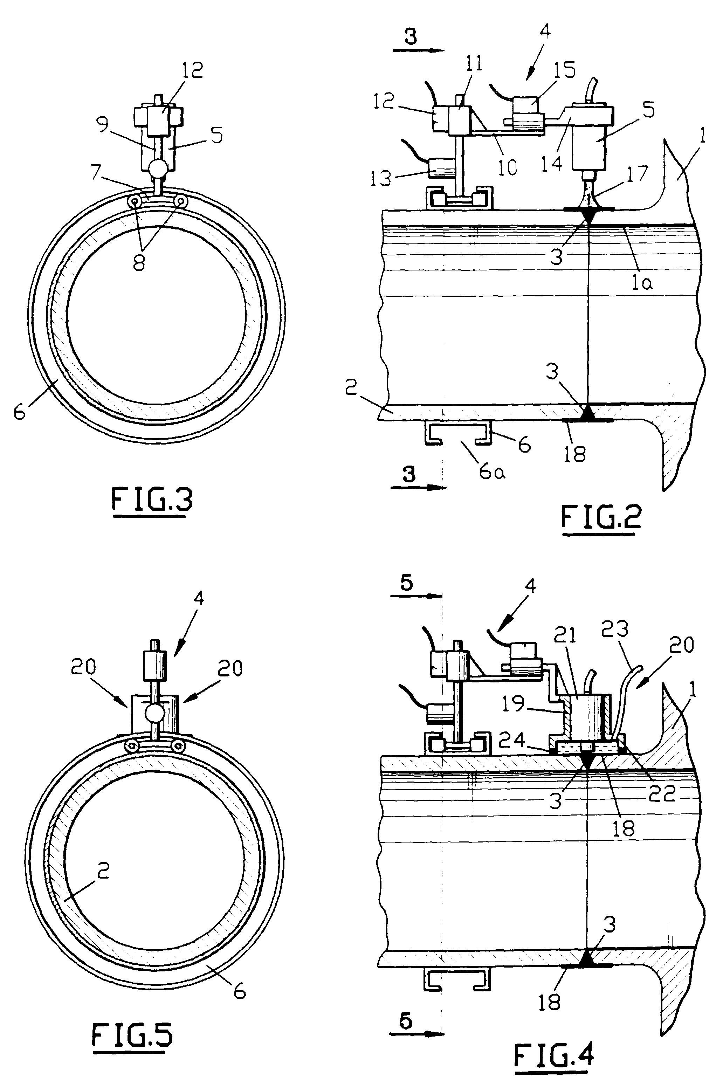

Sur la figure 1, on a représenté la partie d'extrémité de la buse de la torche à plasma 5 représentée sur la figure 2 et utilisée pour effectuer le revêtement par un procédé suivant l'invention, de la zone de jonction comportant la soudure 3, d'une tubulure 1 et d'une canalisation 2 d'un réacteur nucléaire à eau sous pression.

La buse de la torche à plasma 5 comporte une enveloppe externe 5a et une anode de forme tubulaire 5b disposée à la partie centrale de l'enveloppe 5a.

L'enveloppe 5a de la torche et l'anode tubulaire 5b délimitent une chambre annulaire 5'a reliée à une conduite d'arrivée d'eau de refroidissement et disposée à la périphérie de l'anode.

L'enveloppe 5a délimite également une seconde chambre 5''a reliée d'une part à la chambre annulaire 5'a et d'autre part à une conduite de sortie de l'eau de refroidissement. On peut ainsi assurer le refroidissement de la torche 5 par circulation d'eau dans les chambres 5'a et 5"a.

La partie centrale de l'enveloppe 5a de la torche 5 est en un matériau isolant et délimite une chambre centrale 5d autour de la cathode 5c. La chambre centrale 5d est reliée par l'intermédiaire d'une conduite 5'd à une source d'argon sous pression.

Une conduite 5e traversant la chambre de refroidissement annulaire 5'a débouche à l'intérieur de l'anode tubulaire 5b.

La torche 5 est reliée à une source de courant électrique, de manière qu'un arc A éclate entre la cathode 5c et l'anode 5b. Les pièces à revêtir 1, 2 et 3 sont portées à un potentiel anodique.

De l'argon sous pression est introduit par la conduite 5'd et traverse l'arc A, à l'intérieur de l'anode tubulaire 5b. On forme ainsi un plasma par ionisation de l'argon dans l'arc électrique A.

Le gaz sous pression qui se détend dans la chambre 5d et s'échauffe au contact de l'arc A produit un jet de plasma 17 à très grande vitesse.

Une poudre métallique, par exemple une poudre d'un alliage de nickel mise en suspension par un gaz porteur qui peut être de l'argon est injectée par la conduite 5e, à l'intérieur de l'anode 5b, dans l'arc A.

La poudre est fondue par l'arc et mise en suspension dans le jet de plasma 17.

Au contact des pièces 1 et 2 dans leur zone de jonction 3, le jet de plasma 17 forme une couche de revêtement 18 en alliage de nickel.

Le procédé de fusion au plasma d'arc semi-transféré permet de projeter une poudre fondue sur les pièces, de manière à les recouvrir d'une couche de revêtement.

Dans le cas du procédé suivant l'invention, on règle le jet de la torche à plasma et la distance entre la buse de la torche à plasma et la pièce ainsi que les conditions de balayage, de manière à assurer l'accrochage de la couche de revêtement sans refusion des pièces. En particulier, la distance entre la buse et les pièces à recouvrir doit être comprise entre 20 et 80 mm dans le cas du procédé selon l'invention alors que cette distance est généralement inférieure à 8 mm dans le cas des procédés de revêtement par plasma d'arc connus de l'art antérieur. On garde ainsi les propriétés et en particulier les propriétés mécaniques d'origine des pièces qui ne subissent aucune transformation notable dans leur épaisseur. Les pièces revêtues n'ont pas à subir de traitement thermique.

En outre, le revêtement est réalisé sous gaz neutre, par exemple sous argon.

Un confinement des gaz peut être obtenu grâce à un cloisonnement souple.

Le métal fondu provenant de la poudre injectée dans l'arc par le canal 5e de l'anode est projeté par le gaz plasmagène introduit sous pression par la conduite 5'd, sur la surface des pièces à recouvrir et se trouve de ce fait mis en contact avec pression et étalé contre la surface des pièces pour réaliser une couche homogène et parfaitement étanche. Il est à remarquer que dans le cas du procédé suivant l'invention qui met en oeuvre la technique de l'arc semi-transféré, un gaz sous pression assure la projection d'un métal refondu dans l'arc sur les pièces à recouvrir. Ce procédé doit être distingué du procédé à plasma d'arc transféré dans lequel on n'utilise pas de gaz sous pression pour projeter le métal en fusion de recouvrement. Dans le cas du procédé au plasma d'arc transféré, on réalise une véritable soudure avec refusion des pièces et fusion de métal d'apport.

Dans le cas du procédé selon l'invention à arc semi-transféré, la distance entre la torche et la pièce à revêtir est généralement très supérieure à la distance torche-pièce dans le cas des procédés selon l'art antérieur. Cette distance est comprise entre 20 et 80 mm et peut être de l'ordre de 30 mm dans le cas du revêtement de la surface externe de pièces telles que des tubulures ou conduites primaires 2, 3.

La torche 5 peut présenter des dimensions réduites, par exemple un diamètre extérieur de l'ordre de 15 mm et une longueur de l'ordre de 50 mm.

Sur les figures 2 et 3, on a représenté une portion d'une tubulure 1 de la cuve d'un réacteur nucléaire à laquelle est reliée l'extrémité d'une canalisation 2 de grand diamètre du circuit primaire du réacteur.

La tubulure 1 qui est venue de matière avec la virole porte-tubulure de la cuve est en acier faiblement allié et revêtue intérieurement d'une couche d'acier inoxydable 1a.

La canalisation 2 du circuit primaire est soudée bout à bout à l'extrémité de la tubulure 1, par l'intermédiaire d'un cordon de soudure 3.

La soudure 3 assure la liaison entre les zones des composants 1 et 2 présentant des compositions et des structures différentes. La soudure 3 est donc une zone d'hétérogénéité pour les composants 1 et 2 du circuit primaire du réacteur.

Pendant le fonctionnement du réacteur nucléaire, de l'eau à 310°C circule à l'intérieur de la canalisation 2 et de la tubulure 1, de sorte que la paroi de forte épaisseur des composants du réacteur nucléaire constitués par la tubulure 1 de la cuve et la canalisation 2 est portée à une température élevée et susceptible de variations entre la température ambiante et la température de 310°C entre les états à froid et à chaud du réacteur nucléaire. Cette paroi est d'autre part en contact avec l'air atmosphérique par sa surface extérieure.

On a pu observer des amorces de fissures, sur la surface extérieure de la zone hétérogène de raccordement d'une tubulure et d'une canalisation primaire.

Le procédé de revêtement étanche suivant l'invention permet d'éviter tout contact entre la surface extérieure de la zone hétérogène 3 et l'air atmosphérique ou d'autres agents extérieurs, pendant le fonctionnement du réacteur. Le procédé de revêtement suivant l'invention permet donc de mettre en oeuvre un traitement préventif contre la fissuration au niveau des soudures des canalisations primaires sur les tubulures d'une cuve de réacteur nucléaire à eau sous pression.

Comme il est visible sur la figure 2, pour mettre en oeuvre le procédé suivant l'invention, on utilise un dispositif désigné de manière générale par le repère 4 et comportant une torche à plasma à arc semi-transféré 5 avec une alimentation du jet de plasma en une poudre métallique à base de nickel et de chrome.

La torche à plasma 5 est du type général représenté sur la figure 1 et permet de mettre en oeuvre le procédé de production d'un plasma d'arc semi-transféré.

Le dispositif 4 comporte un rail 6 fixé à demeure, par exemple par soudure autour de la partie d'extrémité de la canalisation 2 du circuit primaire, au voisinage de la zone de jonction de cette canalisation à une tubulure 1 de la cuve du réacteur nucléaire à eau sous pression. Le rail 6 présente une forme profilée et une section méridienne de forme rectangulaire comportant du côté extérieur de la section, une ouverture 6a. A l'intérieur du rail profilé 6 de forme annulaire, un chariot 7 comportant des roues 8 est monté mobile, de manière que les roues 8 se déplacent avec un faible jeu, à l'intérieur des deux parties d'extrémité en forme de C du profil du rail annulaire 6.

Le chariot 7 porte une colonne 9 sur laquelle une plateforme 10 est montée coulissante par l'intermédiaire d'un manchon 11 monté glissant sur la colonne 9.

Un moteur 12 permet de déplacer la plateforme 10 en translation dans un sens et dans l'autre, suivant la direction longitudinale de la colonne 9.

Un second moteur d'entraînement 13 permet d'entraîner le chariot 7, de manière qu'il se déplace à l'intérieur du rail annulaire 6 coaxial à la canalisation primaire 2 et à la tubulure 1.

Sur la plateforme 10, est monté glissant, dans une direction perpendiculaire à la direction longitudinale de la colonne 9, un support 14 sur lequel est fixée la torche à plasma 5.

Un moteur 15 permet d'entraîner le support 14 en translation dans un sens ou dans l'autre, dans la direction perpendiculaire à la colonne 9.

Les moteurs 12, 13 et 15 et la torche 5 sont reliés par des câbles à des sources d'énergie électrique appropriées permettant l'alimentation des moteurs et de la torche.

De plus, la torche 5 est reliée par des canalisations à une source de gaz inerte et à un récipient distributeur de poudre d'un alliage renfermant du nickel et du chrome qui est incorporé au jet de plasma.

Lorsqu'elle est alimentée, la torche 5 produit un jet de plasma 17 qui est dirigé vers la surface extérieure de la zone de soudure 3 de la canalisation 2.

En déplaçant le chariot 7 à l'intérieur du rail 6 autour de la canalisation 2, on réalise un balayage circonférentiel de toute la surface extérieure de la zone de soudure 3.

La distance entre la buse de sortie de la torche 5 et la surface extérieure de la canalisation 2 peut être réglée par le moteur 12 de déplacement de la plateforme 10 le long de la colonne 9, à une valeur proche de 30 mm.

En outre, un balayage de la zone de soudure dans la direction longitudinale peut être réalisé par déplacement du support 14 à l'aide du moteur 15.

Le dispositif de déplacement 4 équipé de la torche de soudage 5 permet de réaliser une couche de revêtement 18 en alliage au nickel-chrome sur la surface extérieure de la zone de soudure 3 et sur la surface extérieure des parties de jonction de la tubulure 1 et de la canalisation 2.

La technique de revêtement par jet de plasma d'arc semi-transféré avec injection d'une poudre d'un alliage au nickel-chrome dans le jet de plasma permet de réaliser une couche 18 parfaitement adhérente et parfaitement étanche au-dessus de la zone de jonction des deux composants du réacteur constitués par la tubulure de cuve 1 et la canalisation primaire 2.

De préférence, le revêtement de la surface extérieure de la zone de jonction entre la tubulure 1 et la canalisation 2 du réacteur nucléaire est réalisé de manière préventive, avant la mise en fonctionnement du réacteur nucléaire, à l'issue des opérations de raccordement de la cuve et des canalisations du circuit primaire.

Pendant le fonctionnement du réacteur nucléaire, la couche 18 totalement étanche permet d'isoler la surface extérieure de la canalisation 2 et de la tubulure 1 dans leur zone de jonction, ce qui permet de limiter et pratiquement d'éviter toute fissuration de la zone de jonction en service.

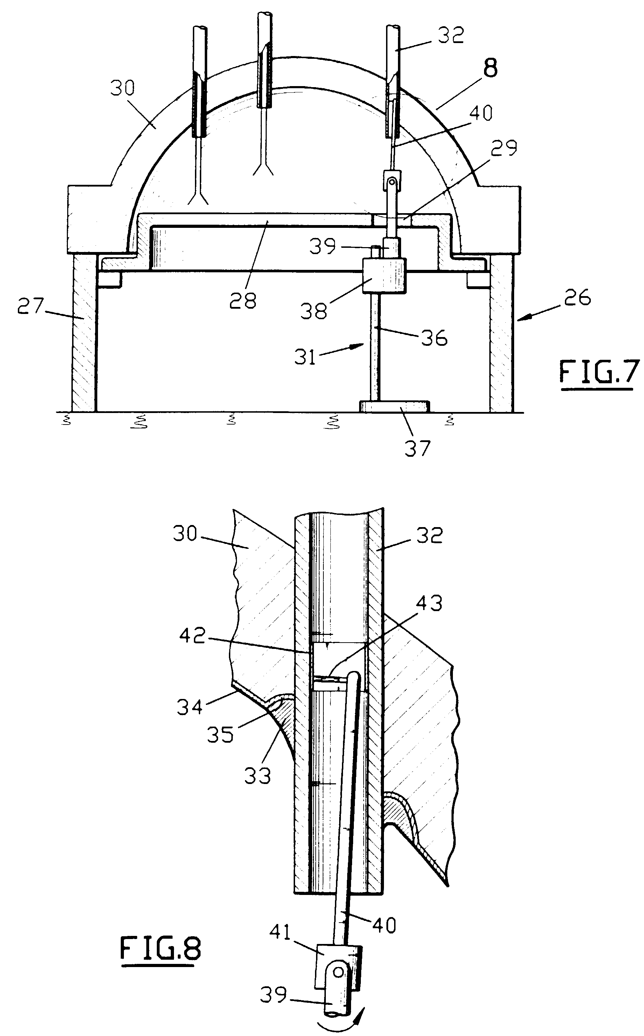

Sur les figures 4 et 5, on a représenté le dispositif de déplacement 4 de la torche 5 déjà décrit en se référant aux figures 2 et 3, pendant une opération de contrôle au cours de laquelle le dispositif de déplacement 4 est utilisé pour déplacer une tête de contrôle par ultrasons 20 autour de la zone de jonction de la canalisation 2 et de la tubulure 1, après réalisation de la couche de revêtement étanche protectrice 18 par le procédé de l'invention.

La tête de contrôle 20 comporte un support de sonde 19 dans lequel est montée la sonde à ultrasons 21 constituée par un transducteur émetteur-récepteur relié à une source d'alimentation en courant électrique par un câble.

Le support de sonde 19 de la tête de contrôle est prolongé sous la forme d'une paroi d'un conteneur 22 dont le bord d'extrémité est mis en contact étanche avec la surface extérieure de la canalisation 2 et de la tubulure 1, de part et d'autre de la soudure 3 et des bords latéraux de la couche de revêtement 18, par l'intermédiaire de joints 24 constitués par des brosses ou des rebords en matériau élastomère venant en contact frottant avec la surface extérieure de la canalisation 2 et de la tubulure 1, pendant le déplacement en rotation de la tête de contrôle 20 entraînée par le dispositif de manutention 4.

De l'eau est introduite par une tuyauterie 23, dans l'espace délimité par la paroi 22 et la surface extérieure de la canalisation 2 et de la tubulure 1, autour de la couche de revêtement 18. Le dispositif de manutention 4 permet de réaliser le déplacement orbital de la tête de contrôle 20 autour de la zone de soudure 3, de manière à contrôler l'ensemble de la couche de revêtement 18.

De plus, les moyens de déplacement du dispositif 4 en translation permettent de régler la position de la sonde de contrôle et de réaliser un balayage de la couche 18 par le faisceau d'ultrasons produit par le transducteur de la sonde 19.

On réalise ainsi un contrôle d'homogénéité de la couche 18. Il s'est avéré que la couche 18 déposée par le procédé suivant l'invention présente une très bonne homogénéité et une parfaite étanchéité.

Sur la figure 6, on a représenté la zone de jonction de la tubulure 1 et de la canalisation 2 pendant le fonctionnement du réacteur nucléaire.

De manière à isoler thermiquement la canalisation et la tubulure du milieu extérieur, un calorifuge 25 de forte épaisseur est disposé autour de la surface extérieure de la tubulure et de la canalisation. Le calorifuge 25 comporte une partie en creux 25a permettant d'accomoder la présence du rail de guidage 6 utilisé pour le déplacement de la sonde à plasma et de la tête de contrôle, grâce au dispositif de manutention 4, lors de la réalisation et du contrôle de la couche de revêtement de protection étanche 18 de la surface extérieure de la zone de jonction de la tubulure 1 et de la canalisation 2.

Il est donc possible, lors des arrêts du réacteur nucléaire, après démontage du calorifuge 25, de réaliser un contrôle et éventuellement un revêtement de la zone de jonction. Ces opérations peuvent être réalisées très rapidement et très facilement, du fait de la présence à demeure du rail de guidage 6 sur la canalisation 2.

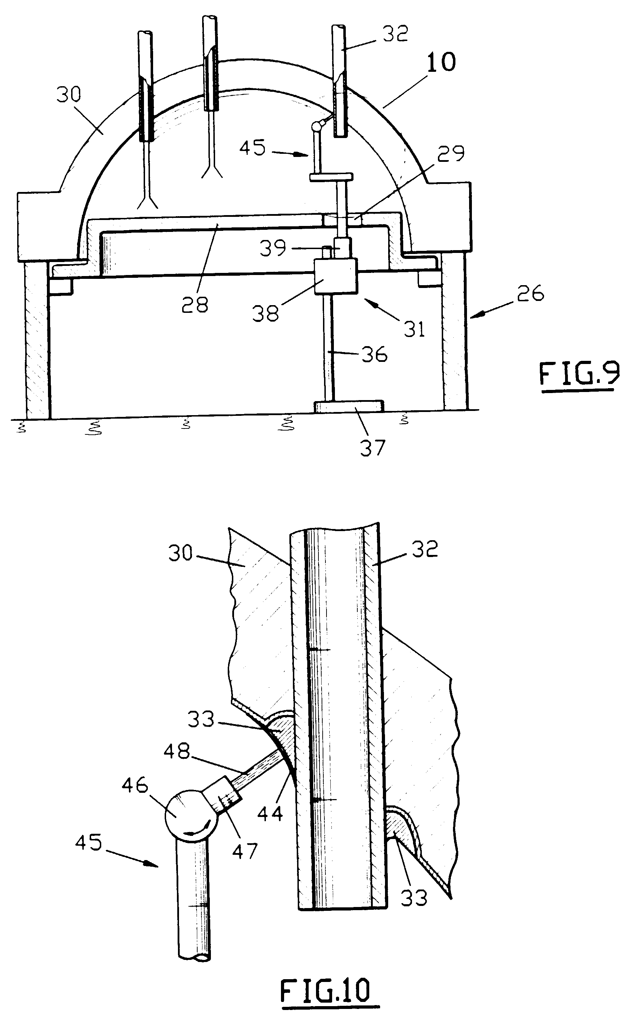

Sur les figures 7 et 8, on a représenté le couvercle 30 de la cuve d'un réacteur nucléaire à eau sous pression en position pour contrôle et réparation sur un stand 26 comportant des supports verticaux 27 sur lesquels on peut déposer et fixer le couvercle 30 après démontage et séparation de la cuve du réacteur nucléaire, pendant un arrêt pour réparation et rechargement de ce réacteur nucléaire.

Le stand de contrôle 26 comporte en plus des supports 27 du couvercle de cuve 30, une paroi de protection biologique 28 percée d'une ouverture 29 permettant d'introduire à l'intérieur d'un adaptateur 32 de traversée du couvercle de la cuve, la partie d'extrémité d'un dispositif d'intervention 31 constitué par une torche à plasma d'arc semi-transféré. On peut ainsi réaliser une couche de revêtement étanche par un procédé suivant l'invention, à l'intérieur d'un adaptateur 32 en alliage de nickel, dans sa zone de raccordement au couvercle de la cuve.

Comme il est visible sur la figure 8, la surface inférieure interne du couvercle de cuve 30 de forme hémisphérique est revêtue d'une couche de recouvrement 34 et comporte autour de l'ouverture de passage de l'adaptateur 32, une cavité 35 également recouverte d'une couche de revêtement.

La paroi du couvercle 30 est réalisée en un acier faiblement allié de la même nuance que les viroles de la cuve du réacteur nucléaire. La couche 34 de revêtement intérieur de la cuve est en acier inoxydable ; la cavité 35 est recouverte d'une couche de beurrage en alliage de nickel d'une nuance analogue à celle de l'adaptateur 32. On peut ainsi réaliser une soudure 33 de jonction entre l'adaptateur 32 constitué par une pièce tubulaire en alliage de nickel et le couvercle 30 en acier faiblement allié.

Après un certain temps de fonctionnement du réacteur nucléaire, on a décelé des fissures sur la surface intérieure de l'adaptateur, en particulier dans la zone voisine de la soudure 33 et également une certaine fissuration, à l'extérieur de l'adaptateur 2, dans la zone de soudure 33.

La mise en oeuvre du procédé de revêtement suivant l'invention en utilisant un dispositif tel que représenté sur les figures 7 et 8 permet de réaliser une couche de revêtement parfaitement étanche sur la surface intérieure de l'adaptateur 32 et en particulier dans la zone de cette surface intérieure voisine de la soudure 33. De cette manière, on évite une fissuration ultérieure de la paroi de l'adaptateur dans le réacteur en service.

La mise en oeuvre du procédé suivant l'invention en utilisant le dispositif représenté sur les figures 9 et 10 permet de réaliser une couche de revêtement parfaitement étanche, à l'extérieur de l'adaptateur, dans la zone de jonction de l'adaptateur 32 et du couvercle de cuve 30 comportant la soudure hétérogène 33.

Le dispositif d'intervention 31 placé à l'intérieur du stand 26 comporte une colonne de guidage verticale 36 fixée sur un support 37 reposant sur le sol du stand 26 et une plateforme motorisée 38 susceptible de se déplacer dans la direction verticale le long de la colonne 36.

Sur la plateforme 38 est monté rotatif autour de son axe, un support vertical 39.

A l'extrémité supérieure du support vertical 39 est fixée, par l'intermédiaire d'une articulation 41 visible sur la figure 8, une torche à plasma d'arc semi-transféré 40 présentant une buse de forme allongée ayant un diamètre sensiblement inférieur au diamètre intérieur de l'adaptateur 32.

La torche à plasma 40 peut être introduite à l'intérieur de l'adaptateur 32 avec une inclinaison réglée, de manière que la buse d'éjection du jet de plasma 43 se trouve à la distance voulue de la paroi intérieure de l'adaptateur 32.

Le déplacement en translation dans la direction verticale de la plateforme 38 et en rotation du support 39 porté par la plateforme 38 permet de réaliser le balayage de la surface intérieure de l'adaptateur 32 par le jet de plasma, dans toute la zone voulue.

Une poudre en un alliage au nickel-chrome est introduite dans le jet de plasma, de manière qu'une couche protectrice 42 soit déposée à l'intérieur de l'adaptateur 32, dans la zone voulue et en particulier, au niveau de la soudure 33.

Dans le cas d'un adaptateur en un alliage de nickel dont la résistance à la corrosion sous tension au contact du fluide de refroidissement du réacteur s'est révélée insuffisante, on a pu ainsi améliorer considérablement la tenue à la fissuration des adaptateurs, en déposant sur leur surface intérieure, en particulier dans la zone de soudure sur le couvercle de cuve, une couche en un alliage de nickel plus fortement chargé en chrome que l'alliage constituant la paroi de l'adaptateur.

De plus, la couche de revêtement 42 réalisée sur la surface intérieure de l'adaptateur est parfaitement étanche et permet d'isoler complètement la surface intérieure de l'adaptateur du fluide de refroidissement du réacteur constitué par de l'eau sous pression.

Le procédé suivant l'invention peut être utilisé aussi bien pour réaliser un traitement préventif de la surface intérieure des adaptateurs, avant toute apparition de fissuration, que pour réaliser un traitement curatif après l'apparition de fissures.

Dans ce cas, les fissures sont colmatées et recouvertes par une couche d'alliage au nickel-chrome parfaitement étanche et homogène.

Les contrôles effectués sur la couche 42 réalisée par le procédé suivant l'invention ont permis de montrer que la couche d'alliage déposée à l'intérieur de l'adaptateur en alliage de nickel est parfaitement adhérente et parfaitement homogène.

Sur les figures 9 et 10, on a représenté un dispositif permettant de réaliser une couche protectrice 44, à l'extérieur de l'adaptateur 32, de manière à recouvrir la zone de jonction entre l'adaptateur 32 et le couvercle de cuve 30 comportant la soudure 33.

Le support vertical 39 du dispositif d'intervention 31 porte par sa partie d'extrémité supérieure, la torche à plasma 45 qui comporte un support vertical placé dans une position désaxée par rapport à l'axe de rotation du support 39.

La buse 47 de la torche à plasma 45 est fixée de manière articulée à la partie supérieure de la torche 45, par l'intermédiaire d'une articulation motorisée 46.

De cette manière, la buse 47 produit un jet de plasma 48 dans lequel on injecte une poudre d'alliage au nickel-chrome et qui peut être dirigé vers un point quelconque de la surface extérieure de la zone de jonction de l'adaptateur 32 et du couvercle de cuve 30 comportant la soudure 33.

On peut ainsi réaliser le balayage de la surface extérieure de la zone de jonction pour réaliser le dépôt d'une couche de revêtement protecteur 44.

Par déplacement simultané du support 39 en rotation et de la plateforme 38 en translation, on peut réaliser le balayage de toute la zone de jonction, autour de la partie d'extrémité de l'adaptateur 32 saillante en-dessous du couvercle 30.

La couche réalisée par le procédé de l'invention s'est avérée parfaitement homogène et adhérente. Cette couche qui est totalement étanche assure une protection efficace contre la corrosion fissurante de la zone de jonction de l'adaptateur, dans le réacteur nucléaire en service.

Le procédé suivant l'invention utilisant la technique de l'arc semi-transféré permet de réaliser des revêtements dont l'épaisseur est comprise entre 0,5 et 1 mm, dans le cas des applications à des composants pour réacteur nucléaire telles que décrites plus haut.

L'alliage au nickel-chrome utilisé, en particulier dans le cas du recouvrement des adaptateurs et de leur zone de jonction, peut être un alliage d'une composition proche de l'alliage connu sous la dénomination commerciale "Alliage 690".

La technique à l'arc semi-transféré permet de projeter le métal de revêtement avec force contre la surface des pièces à revêtir, du fait de l'utilisation d'un gaz plasmagène sous pression, si bien que l'accrochage de la couche de revêtement sur la surface des pièces peut être réalisé sans refusion superficielle de ces pièces. En cela, cette technique se distingue parfaitement des techniques de soudage ou de revêtement connues de l'art antérieur.

Le procédé suivant l'invention, lorsqu'il est utilisé pour réaliser la protection locale de parties du circuit primaire d'un réacteur nucléaire assure un allongement de la durée de vie du réacteur en limitant ou en supprimant les risque de fissuration de la paroi du composant, au contact d'un fluide qui peut être le fluide de refroidissement primaire du réacteur.

En particulier, le procédé suivant l'invention est un procédé particulièrement efficace pour limiter les risques de corrosion fissurante dans les parties du réacteur en contact avec le fluide de refroidissement primaire qui comportent des soudures ou des revêtements renfermant de fortes proportions de nickel.

L'invention peut être appliquée de manière générale pour la protection de surfaces métalliques de composants d'un réacteur nucléaire en un acier ou un alliage renfermant du nickel.

L'invention ne se limite pas aux modes de réalisation qui ont été décrits.

C'est ainsi qu'on peut réaliser le dépôt du revêtement en utilisant un dispositif différent de ceux qui ont été décrits et comportant en particulier des moyens de déplacement de la torche à plasma différents de ceux qui ont été décrits et adaptés à la forme et à la position des parties des composants de réacteur nucléaire sur lesquelles on réalise le dépôt.

Les paramètres de réglage de la torche à plasma à arc semi-transféré peuvent être variables et adaptés aux caractéristiques du revêtement à réaliser. Ces paramètres sont en particulier la différence de potentiels entre l'anode de la torche à plasma et les pièces à revêtir, la puissance électrique transmise entre les électrodes de la torche et entre l'anode et les pièces à revêtir, le débit et la pression du gaz plasmagène assurant l'entraînement du métal de revêtement à l'état fondu.

Dans tous les cas cependant, la pression et le débit du gaz de formation du plasma doivent être suffisants pour assurer un entraînement du métal de revêtement fondu dans des conditions correspondant à la technique de l'arc semi-transféré.

De manière générale, l'invention s'applique au revêtement de nombreuses parties des composants d'un réacteur nucléaire exposés à une corrosion fissurante en service.

## Revendications

1. Utilisation d'un procédé de réalisation d'un revêtement sur une surface par balayage de la surface par un jet d'un plasma d'arc semi-transféré (17, 43, 48) dans lequel on introduit une poudre métallique, pour la protection contre la corrosion d'une zone hétérogène du point de vue métallurgique, d'un composant d'un réacteur nucléaire susceptible de subir une fissuration pendant le fonctionnement du réacteur nucléaire, le réglage du jet de plasma (17, 43, 48), l'introduction de la poudre métallique dans le plasma et le balayage de la surface assurant une projection et une fixation de la poudre métallique sur la surface sans fusion de la surface du composant, pour réaliser une couche de revêtement compacte (18, 42, 44), homogène et étanche, d'une épaisseur au plus égale à 1 mm.

2. Utilisation suivant la revendication 1, caractérisée par le fait que le jet de plasma est formé dans une torche à plasma (5) d'arc semi-transféré ayant une buse de sortie du plasma et qu'on maintient la distance de la buse de sortie de la torche à plasma (5) à la surface du composant (1, 2, 30, 32) sur laquelle on réalise le revêtement à une valeur comprise entre 20 et 80 mm.

3. Utilisation suivant l'une quelconque des revendications 1 et 2, caractérisée par le fait que la surface du composant de réacteur nucléaire (1, 2, 30, 32) est une surface d'une partie de jonction par soudure du composant (1, 2, 30, 32) avec un second composant du réacteur nucléaire (1, 2, 30, 32).

4. Utilisation suivant l'une quelconque des revendications 1 à 3, caractérisée par le fait que le composant de réacteur nucléaire (1, 2, 30, 32) est en un matériau renfermant du nickel et que la poudre métallique introduite dans le jet de plasma (17, 43) renferme du nickel et du chrome.

5. Utilisation suivant l'une quelconque des revendications 1 à 4, caractérisée par le fait qu'on dépose sur la surface du composant de réacteur nucléaire (1, 2, 30, 32) une couche de revêtement d'une épaisseur comprise entre 0,5 et 1 mm.

6. Utilisation suivant l'une des revendications 1 à 5 dans le cas du revêtement de la surface extérieure d'une zone de raccordement entre une canalisation primaire (1) et une tubulure (2) d'un réacteur nucléaire à eau sous pression.

7. Utilisation suivant l'une quelconque des revendications 1 à 5 dans le cas du revêtement intérieur d'un adaptateur (32) de traversée du couvercle de la cuve (30) d'un réacteur nucléaire à eau sous pression.

8. Utilisation suivant l'une quelconque des revendications 1 à 5 dans le cas du revêtement d'une zone de jonction par soudure (33), entre un adaptateur (32) de traversée d'un couvercle de cuve (30) d'un réacteur nucléaire à eau sous pression et le couvercle de cuve (30).

9. Dispositif de revêtement de la surface extérieure d'une zone de raccordement entre une tubulure (1) de la cuve d'un réacteur nucléaire à eau sous pression et une canalisation (2) du circuit primaire du réacteur, comportant un rail de guidage annulaire (6) fixé dans une disposition coaxiale sur la surface extérieure de la canalisation primaire (2) au voisinage de la zone de raccordement, un chariot (7) monté mobile sur le rail annulaire (6), une colonne de guidage (9) d'une plateforme (10) dans une direction radiale de la canalisation primaire (2), un support (14, 19) monté mobile sur la plateforme (10) dans une direction axiale de la canalisation primaire (2) et des moyens motorisés (12, 13, 15) de déplacement de la plateforme (10), du chariot (7) et du support (14), de manière à déplacer le support (14, 19) en rotation autour de l'axe de la canalisation primaire (2), dans une direction radiale et dans une direction axiale par rapport à la canalisation (2), caractérisé par le fait qu'il comporte de plus une torche à plasma d'arc semi-transféré (5) fixée sur le support (14, 19) par l'intermédiaire de moyens de fixation.

10. Dispositif de réalisation d'un revêtement protecteur sur la surface intérieure d'un adaptateur de traversée tubulaire (32) du couvercle de la cuve (30) d'un réacteur nucléaire à eau sous pression , le couvercle de la cuve (30) étant déposé sur un stand d'intervention (26) et accessible par le dessous au travers d'une ouverture (29) d'une paroi de protection (28), caractérisé par le fait qu'il comporte une colonne verticale (36) fixée sur un support (37) reposant sur une surface d'appui du stand (26) en-dessous d'un adaptateur (32) en position verticale, une plateforme (38) montée mobile dans la direction verticale sur la colonne (36), un support vertical (39) monté rotatif autour d'un axe vertical sur la plateforme (38) et une torche à plasma d'arc semi-transféré (40) fixée sur une extrémité supérieure du support rotatif (39).

11. Dispositif de réalisation d'un revêtement protecteur sur une surface d'une zone de jonction par soudage (33) d'un adaptateur (32) de traversée d'un couvercle (30) d'une cuve de réacteur nucléaire à eau sous pression disposé sur un stand d'intervention (26), de manière que la zone de jonction (33) de l'adaptateur (32) soit accessible par le dessous du couvercle à travers une ouverture (29) d'une paroi d'isolation biologique (28) du stand (26), caractérisé par le fait qu'il comporte une colonne (36) solidaire d'un support (37) reposant sur une surface horizontale du stand (26) située en-dessous de l'ouverture (29) et de l'adaptateur (32), une plateforme (38) mobile dans la direction verticale sur la colonne (36), un support (39) vertical mobile en rotation autour d'un axe vertical sur la plateforme (38) et une torche à plasma d'arc semi-transféré (45) comportant une buse (47) d'éjection d'un jet de plasma (48) montée pivotante à une extrémité de la torche (45) fixée dans une disposition verticale sur le support (39).

## Patentansprüche

1. Verwendung eines Verfahrens zur Herstellung eines Überzugs bzw. einer Schutzschicht auf einer Oberfläche durch Überstreichen der Oberfläche mit einem Strahl eines halbübertragenen Plasmabogens (17,43,48) bei dem ein metallisches Pulver für den Schutz gegen die Korrosion einer heterogenen Zone aus metallurgischer Sicht eingeführt wird, einer Komponente eines Kernreaktors, die in der Lage ist eine Schlitzbildung oder Rißbildung während des Betriebs des Kernreaktors auszuhalten, wobei die Regulierung des Plasmastrahls (17,43,48), die Einführung des metallischen Pulvers in das Plasma und das Überstreichen der Oberfläche eine Projektion und eine Fixierung des metallischen Pulvers auf der Oberfläche ohne Schmelzen der Oberfläche der Komponente sicherstellen, zum Bilden einer kompakten Schutzschicht (18,42,44), die homogen und dicht ist, mit einer Dicke von höchstens 1 mm.

2. Verwendung nach Anspruch 1, dadurch gekennzeichnet, daß der Plasmastrahl in einem Plasmabrenner (5) mit halbübertragenem Bogen gebildet wird, der eine Austrittsdüse des Plasmas aufweist, und daß der Abstand der Austrittsdüse des Plamabrenners (5) zur Oberfläche der Komponente (1,2,30,32) gehalten wird, auf der der Überzug mit einem Wert zwischen 20 und 80 mm erzeugt wird.

3. Verwendung nach Anspruch 1 oder 2, dadurch gekennzeichnet, daß die Oberfläche der Komponente des Kernreaktors (1,2,30,32) eine Oberfläche eines geschweißten Verbindungsbereichs der Komponente (1,2,30,32) mit einer zweiten Komponente des Kernreaktors (1,2,30,32) ist.

4. Verwendung nach einem der Ansprüche 1 bis 3, dadurch gekennzeichnet, daß die Komponente des Kernreaktors (1,2,30,32) aus einem Material ist, das Nickel einschließt, und daß das in den Plasmastrahl (17,43) hingeführte metallische Pulver Nickel und Chrom einschließt.

5. Verwendung nach einem der Ansprüche 1 bis 4, dadurch gekennzeichnet, daß auf der Oberfläche der Komponente des Kernreaktors (1,2,30,32) eine Überzugsschicht von einer Dicke zwischen 0,5 und 1 mm aufgebracht wird.

6. Verwendung nach einem der Ansprüche 1 bis 5 in dem Fall des Beschichtens der äußeren Oberfläche einer Verbindungszone zwischen einem Primärkanal (1) und einem Rohr (2) eines Druckwasserkernreaktors.

7. Verwendung nach einem der Ansprüche 1 bis 5, in dem Fall des inneren Überzugs eines Adapters (32), der den Deckel des Behälters (30) eines Druckwasserkernreaktors durchquert.

8. Verwendung nach einem der Ansprüche 1 bis 5, in dem Fall des Überzugs einer durch Schweißen (33) verbundenen Zone, zwischen einem Hindurchtrittadapter (32) eines Behälterdeckels (30) eines Druckwasserkernreaktors und dem Behälterdeckel (30).

9. Vorrichtung zum Beschichten der Außenoberfläche einer Verbindungszone zwischen einem Rohrstutzen (1) des Druckwasserkernreaktorbehälters und einem Kanal (2) des Primärkreises des Reaktors, mit einer ringförmigen Führungsschiene (6), die in einer koaxialen Anordnung an der Außenoberfläche des Primärkanals (2) in der Nähe der Verbindungszone befestigt ist, wobei ein Schlitten (7) beweglich auf der ringförmigen Schiene (6) angebracht ist, einer Führungssäule (9) einer Plattform (10) in eine radiale Richtung des Primärkanals (2), einem Träger (14,19) der an der Plattform (10) in eine axiale Richtung des Primärkanals (2) beweglich angeordnet ist, und Antriebseinrichtungen (12,13,15) zum Verschieben der Plattform (10), des Schlittens (7) und des Trägers (14), derart, daß der Träger (14,19) in Drehung um die Achse des Primärkanals (2) in radialer und in axialer Richtung bezüglich des Kanals (2) bewegt wird, dadurch gekennzeichnet, daß sie weiterhin einen Plasmabrenner mit halbübertragenem Bogen (5) aufweist, der an dem Träger (14,19) mittels Befestigungseinrichtungen befestigt ist.

10. Vorrichtung zum Erzeugen eines Schutzüberzugs auf der Innenoberfläche eines mit rohrförmigen Durchtrittsadapters(32) des Deckels des Behälters (30) eines Druckwasserkernreaktors, wobei der Deckel des Behälters (30) auf einem Interventionsstand (26) abgelegt wird und von unten durch eine Öffnung (29) in einer Seitenwand (28) erreichbar ist, dadurch gekennzeichnet, daß er eine vertikale Säule (36)aufweist, die an einer Stütze (37) befestigt ist, die auf einer Abstützoberfläche des Standes (26) unterhalb eines Adapters (32) in Vertikalposition ruht, wobei eine Plattform (38) beweglich in vertikaler Richtung an der Säule (36) angebracht ist, wobei eine vertikale Stütze (39) drehbar um eine vertikale Achse auf der Plattform (38) angebracht ist, und einen Plasmabrenner mit halbübertragenem Bogen (4) aufweist, der an einem oberen Ende der drehbaren Stütze (39) befestigt ist.

11. Vorrichtung zum Erzeugen eines Schutzüberzugs auf einer Oberfläche einer durch Schweißen verbundenen Zone (33) eines Adapters (32), der einen Deckel (30) eines Druckwasserkernreaktorbehälters durchquert, der auf einem Interventions- oder Eingriffsstand (26) derart angeordnet ist, daß die Verbindungszone (33) des Adapters (32) von unterhalb des Deckels durch eine Öffnung (29) einer biologischen Isolationswand (28) des Standes (26) her erreichbar ist, dadurch gekennzeichnet, daß sie weiterhin eine Säule (36), die mit einer Stütze (37) verbunden ist, die auf einer horizontalen Oberfläche des Standes (26) ruht, die sich unterhalb der Öffnung (29) und des Adapters (32) befindet, eine Plattform (38), die in der vertikalen Richtung an der Säule (36) beweglich ist, eine Stütze (39), die vertikal durch Drehen um eine vertikale Achse an der Plattform (38) beweglich ist, und einen Plasmabrenner mit halbübertragenem Bogen (45), der eine Spritzdüse (47) eines Plasmastrahls (48) aufweist, die schwenkbeweglich an einem Ende des Brenners (45) angeordnet ist, der in einer vertikalen Stellung an der Stütze (39) befestigt ist, aufweist.

## Claims

1. Use of a process for producing a coating on a surface by sweeping the surface by a semi-transferred arc plasma jet (17, 43, 48) in which a metal powder is introduced for protection against corrosion of a zone, which is heterogeneous from the metallurgical point of view, of a component of a nuclear reactor which is capable of undergoing fracture during the operation of the nuclear reactor, wherein the adjustment of the plasma jet (17, 43, 48), the introduction of the metal powder into the plasma and the sweeping of the surface ensure that the metal powder is thrown and fixed on the surface without melting of the surface of the component in order to produce a compact coating layer (18, 42, 44) which is homogeneous and impervious and has a thickness at most equal to 1 mm.

2. Use according to Claim 1, characterised in that the plasma jet is formed in a semi-transferred arc plasma torch (5) having a discharge nozzle for the plasma and that the distance between the discharge nozzle of the plasma torch (5) and the surface of the component (1, 2, 30, 32) on which the coating is produced is kept at a value between 20 and 80 mm.

3. Use according to any one of Claims 1 and 2, characterised in that the surface of the nuclear reactor component (1, 2, 30, 32) is a surface of a part for joining the component (1, 2, 30, 32) by welding to a second nuclear reactor component (1, 2, 30, 32).

4. Use according to any one of Claims 1 to 3, characterised in that the nuclear reactor component (1, 2, 30, 32) is made from a material including nickel and that the metal powder introduced into the plasma jet (17, 43) includes nickel and chrome.

5. Use according to any one of Claims 1 to 4, characterised in that a coating layer with a thickness of between 0.5 and 1 mm is deposited on the surface of the nuclear reactor component (1, 2, 30, 32).

6. Use according to one of Claims 1 to 5 in the case of coating of the external surface of a connecting zone between a primary pipeline (1) and a tube (2) of a pressurised-water nuclear reactor.

7. Use according to any one of Claims 1 to 5 in the case of internal coating of an adapter (32) for passage through the cover of the tank (30) of a pressurised-water nuclear reactor.

8. Use according to any one of Claims 1 to 5 in the case of coating of a zone for joining by welding (33) between an adapter (32) for passage through a cover of the tank (30) of a pressurised-water nuclear reactor and the cover of the tank (30).

9. Device for coating the external surface of a connecting zone between a tube (1) of the tank of a pressurised-water nuclear reactor and a pipeline (2) of the primary circuit of the reactor, comprising an annular guide rail (6) fixed in a coaxial arrangement on the external surface of the primary pipeline (2) in the vicinity of the connecting zone, a carriage (7) movably mounted on the annular rail (6), a column (9) for guiding a platform (10) in a radial direction of the primary pipeline (2), a support (14, 19) movably mounted on the platform (10) in an axial direction of the primary pipeline (2) and motorised means (12, 13, 15) for displacement of the platform (10), of the carriage (7) and of the support (14), in such a way as to displace the support (14, 19) in rotation about the axis of the primary pipeline (2) in a radial direction and in an axial direction with respect to the pipeline (2), characterised in that it further comprises a semi-transferred arc plasma torch (5) fixed on the support (14, 19) through the intermediary of fixing means.

10. Device for producing a protective coating on the internal surface of a tubular adapter (32) for passing through the cover of the tank (30) of a pressurised-water nuclear reactor, thee cover of the tank (30) being set on an intervention stand (26) and accessible from below through an opening (29) in a protecting wall (28), characterised in that it comprises a vertical column (36) fixed on a support (37) resting on a bearing surface of the stand (26) below an adapter (32) in a vertical position, a platform (38) mounted so as to be movable in the vertical direction on the column (36), a vertical support (39) mounted so as to rotate about a vertical axis on the platform (38) and a semi-transferred arc plasma torch (40) fixed on an upper end of the rotary support (39).

11. Device for producing a protective coating on a surface of a zone for joining by welding (33) of an adapter (32) for passing through a cover (30) of a tank of a pressured-water nuclear reactor disposed on an intervention stand (26), in such a way that the zone (33) for joining of the adapter (32) is accessible from below the cover through an opening (29) in a biologically isolating wall (28) of the stand (26), characterised in that it comprises a column (36) which is integral with a support (37) resting on a horizontal surface of the stand (26) situated below the opening (29) and the adapter (32), a platform (38) which is movable in the vertical direction on the column (36), a vertical support (39) which is movable in rotation about a vertical axis on the platform (38) and a semi-transferred plasma arc torch (45) including a nozzle (47) for ejecting a plasma jet (48), this nozzle being pivotably mounted on one end of the torch (45) fixed in a vertical arrangement on the support (39).
